# EUROPEAN PATENT SPECIFICATION

(11) **EP 4 460 634 B1**
(45) Date of publication and mention of the grant of the patent: **04.02.2026**
(21) Application number: 22826664.9
(22) Date of filing: 08.12.2022
(51) Int. Cl.: F04B 43/02, F04B 45/04, F04B 49/02, F04B 49/03

(54) **COMPRESSOR WITH REDUCED START-UP TORQUE**
VERDICHTER MIT REDUZIERTEM ANFAHRDREHMOMENT
COMPRESSEUR À COUPLE DE DÉMARRAGE RÉDUIT

(30) Priority: 03.01.2022 DK PA202270001
(43) Date of publication of application: 13.11.2024
(73) Proprietor: Cavendish Hydrogen A/S, 7400 Herning (DK)
(72) Inventor: PEDERSEN, Michael, 7400 Herning (DK); MERRILD, Christian Haastrup, 7490 Aulum (DK); FELDBAK, Per Michael, 7400 Herning (DK)
(74) Representative: Patentgruppen A/S
(86) International application number: PCT/DK2022/050269
(87) International publication number: WO 2023/126040

(56) References cited:
- WO-A2-2006/108775
- CN-A- 103 534 490
- CN-A- 107 683 178
- FR-A- 864 365
- JP-A- 2008 016 038
- US-A1- 2007 104 586
- US-A1- 2014 299 544

## Description

### Field of the invention

The invention relates to a compressor system and a method of controlling a compressor of the compressor system with a reduced start pressure.

### Background of the invention

Diaphragm compressors can be very large mechanical constructions and high-pressure diaphragm compressors may require a large motor to start up the compressor from stand still. In the control of conventional high-pressure diaphragm compressors, to overcome the start-up torque, motor size is increased. This however adds costs and requirement to power supply to the compressor.

Such high-pressure compressors may be used in a hydrogen refueling station, and can easily have a weight above 500Kg. Such compressor is required to pressurize hydrogen gas up to about and sometimes over 100Mpa and they therefore required a large motor.

Such large motors require large start-up currents and to reduce the start-up current, one control strategy for high-pressure compressor of a hydrogen refueling station could be to start up the motor at low gas pressure on the inlet side of the compressor. This is today achieved by venting gas from the inlet side of the compressor prior to the next start-up of the compressor.

### Summary

The document FR 864 365 A discloses a diaphragm compressor with the features of the preamble of claim 1.

The inventors have identified the above-mentioned problems and challenges related to venting of gas prior to start up a high-pressure compressor, and subsequently made the below-described invention which makes it possible to start up the high-pressure compressor with a reduced start-up torque without venting gas.

The present invention solves that above problem by reducing the inlet pressure combined with recycling gas and / or reversed start rotation of the compressor crankshaft, thereby a substantial reduction of needed starting moment is achieved.

In an aspect, the invention relates to a compressor system comprising: a high-pressure diaphragm gas compressor having a compressor inlet and a compressor outlet, wherein an inlet volume is defined between a compressor inlet valve and said compressor inlet, wherein said compressor outlet is fluidly connected to a receiving vessel, a motor configured to drive a crankshaft of said compressor, a controller configured to control operation of said compressor, said compressor inlet valve and said motor, during a plurality of successive operation cycles, wherein during a shut-down part of an operation cycle, said compressor inlet valve is configured for being closed before said crankshaft stop rotation, and wherein during a start-up part of a subsequent operation cycle, said compressor inlet valve is configured for being opened after at least one completed compression stroke.

Beginning a start-up part of an operation cycle at the shut-down part of a previous cycle is advantageous in that pressure in the inlet volume is reduced leading to a reduced start-up torque at start-up of the subsequent operation cycle. This is

An operation cycle can be defined as the operation of the compressor from it is started up and till it is turned off. An operation cycle thus may include a start-up, an operation and a shut-down part. The length of these parts may differ from operation cycle to operation cycle. Typically, the duration of the operation part is longer than the duration of the start-up and shut-down parts.

Any of the mentioned parts of an operation cycle includes a plurality of compression strokes. One complete compression stroke is defined as a movement from bottom dead centre to top dead centre.

The start-up part can be defined as starting when the controller is commanding the motor to start and thereby start rotation of the crankshaft. The start-up part can be defined as terminated when the operation part starts.

The operation part can be defined as starting when the compressor outlet valve is opened, and gas flow is allowed to flow to a receiving vessel. Alternative, other valves may be opened allowing gas flow to one or more supply vessels e.g. during pressure consolidation. The operation part can be defined as terminated when the shut-down part starts.

The shut-down part can be defined as starting when the controller is commanding the motor to stop or the compressor inlet valve to close. The shut-down part can be defined as terminated when the crankshaft stop rotation or when the start-up part starts. It should be mentioned that a command to stop the motor may be the same as a command to stop the compressor. A compressor stop command is typically accompanied by an instruction to close the compressor inlet valve and thereby prevent gas from flow the supply storage to compressor (compression chamber hereof).

High-pressure in this document is defined as a working pressure of the gas which is typically between 5MPa and 100MPa. However, high-pressure may in embodiments include pressures above 100MPa, hence the high-pressure compressor of the present invention may be able to pressurize the gas to a pressure of 200MPa. Further, note that the lower limit of the high-pressure definition may in embodiments also be lower than 5MPa such as 3MPa or 4MPa.

According to an advantageous embodiment of the invention, said compressor comprises two compressor heads.

A two-stage compressor is advantageous in that the pressurizing steps are reduced leading to a more efficient compressor when the compressor is to pressurize gas from a relatively low pressure such as e.g. 200 bar to a relative high pressure such as 1000 bar.

According to an advantageous embodiment of the invention, said compressor inlet is fluidly connected to a supply storage.

The supply storage may comprise more than one vessel. If the supply storage comprises more than one vessel, more than one inlet pressure may be supplied to the compressor. Different inlet pressure is advantageous in that the flexibility of the compressor is increased and less energy is used on pressurizing the gas to a high pressure.

The flow of gas from individual vessels of the supply storage may be controlled by the compressor inlet valve and / or dedicated supply storage vessel valves.

According to an advantageous embodiment of the invention, a recycling valve fluidly connects an outlet volume and said inlet volume.

Connecting the compressor inlet and outlet is advantageous in that flow of pressurized gas to the receiving vessel can be stopped almost instantly. It can be stopped within the time it takes to open the recycling valve and close the compressor outlet valve.

According to an advantageous embodiment of the invention, said receiving vessel is a vehicle vessel, a buffer storage tank or said supply storage.

According to an advantageous embodiment of the invention, said compressor system is part of a hydrogen refueling station.

According to an advantageous embodiment of the invention, said gas is hydrogen gas.

According to an advantageous embodiment of the invention, said high-pressure diaphragm gas compressor comprises a metal diaphragm.

Metal diaphragm should be understood as at least partly metal diaphragm in that coating of a metal sheet may be of a different material than metal such as amorphous or crystalline coatings.

According to an advantageous embodiment of the invention, said metal diaphragm comprises at least two independent sheets

A high-pressure diaphragm gas compressor is, according to the present invention, a compressor that includes a metal diaphragm. The metal diaphragm comprises at least two, preferably three sheets which is advantageous in that then it is possible to detect leakage / to ensure that leaking hydraulic fluid is not mixed with the gas and vice versa. Further, the compressor is able to compress a gas such as hydrogen to a high-pressure for use e.g. in a hydrogen refueling station either for direct fueling of a receiving vessel of a fuel cell vehicle or for increasing pressure in a supply storage vessel (of a hydrogen refueling station, a truck trailer, etc.). The compressor may also be used for pressurizing hydrogen in a storage vessel that is part of an electrolyser plant.

According to an advantageous embodiment of the invention, said controller is further configured to control a compressor outlet valve located in said fluid connection between said compressor outlet and said receiving vessel.

This is advantageous in that it has the effect, that a compressor outlet volume can be defined between the compressor outlet valve and the compressor outlet and in that the pressure hereof can be controlled.

According to an advantageous embodiment of the invention, said controller is further configured to control a recycling valve located in a fluid connection between said compressor inlet and said controller outlet.

This is advantageous in that it has the effect that the compressor can maintained operating at a certain rotation speed of the crankshaft by opening the recycling valve and recycling hydrogen gas between the compressor inlet and outlet.

According to an advantageous embodiment of the invention, during normal operation, said controller is configured to close said compressor outlet valve and opening said recycling valve.

This is advantageous in that it has the effect, that with a closed outlet valve and an open recycling valve the pressure equalizes on both sides of the compressor. Hence, the compressor can continue operating recycling gas in the recycling loop which is advantageous if a fast stop for gas supply from the compressor towards the receiving vessel is required or if a shutdown of the compressor is to be avoided.

The closing of the outlet valve and the opening of the recycling valve may be advantageous in both the shut-down part of an operation cycle and during a normal operation cycle.

According to an advantageous embodiment of the invention, said controller is further configured for controlling said complete compression stroke as a first compression stroke configured including an initial movement of the crankshaft in a direction of rotation opposite to the direction of rotation of the crankshaft after said first complete compression stroke.

According to an advantageous embodiment of the invention, said initial movement is at least 25 degrees, preferably at least 35 degrees, most preferably at least 45 degrees.

Starting the first compression stroke in a start-up part with forcing the crankshaft to rotate at least part of one revolution in the opposite direction to the direction of rotation of the crankshaft during normal compression operation of the compressor is advantageous in that it pressurizes the gas in the gas compression chamber which then acts as a spring like force when the motor changes direction of rotation.

Hence if the crankshaft is rotating clockwise when compressing the gas introduced from e.g. the supply storage, the motor is controlled so as to rotate the crankshaft at least part of one revolution in the counter clockwise direction before it is control to rotate the crankshaft clockwise.

It should be noted that the first compression stroke may be the complete compression stroke

According to an advantageous embodiment of the invention, said controller is further configured to open said compressor inlet valve when said crankshaft reaches a rotation threshold.

First opening the inlet valve when the crankshaft and thereby piston of the compressor reaches a rotation speed threshold value is advantageous in that a torque and /or inertia is built up before the compressor and thereby motor is loaded with a pressure of the gas equal to the pressure of gas in the supply storage. Thereby the start-up torque needed from the motor to start the compressor is reduced.

Together with opening the inlet valve, the controller may also open the outlet valve or the recycling valve.

According to an advantageous embodiment of the invention, said rotation threshold is 175RPM, preferably 225RPM, most preferably 250RPM (RPM; Rounds Per Minute).

According to an advantageous embodiment of the invention, during said shut-down part said controller is further configured to close said compressor outlet valve and opening said recycling valve.

This is advantageous in that it has the effect, that pressure is equalized between the inlet volume and the outlet volume.

According to an advantageous embodiment of the invention, during said shut-down part, said controller is further configured to close said recycling valve and open said compressor outlet valve thereby fluidly connecting said compressor outlet and a buffer storage.

This is advantageous in that pressure in an outlet volume, defined between the compressor outlet and the conduit outlet valve, can be regulated without using the inlet side of the compressor including the supply storage. Typically, the pressure in the outlet volume at the shut-down part of an operation cycle would be too high to be used as starting pressure at a subsequent operation cycle (refueling, pressure consolidation, etc.). So, if not the supplied to the inlet volume or supply storage, as an alternative to venting the gas, the gas can be supplied to a buffer vessel.

According to an embodiment of the invention, said recycling valve is a pressure regulation valve. A pressure regulating recycle valve is advantageous in that it has the effect, that if set to a threshold pressure of e.g. 450bar, the compressor would, seen from a receiving vessel having 100% state of charge at 350 bar such as e.g. a heavy duty vehicle, be an infinite gas supply (to the extend the supply storage and compressor can comply with demand from the receiving vessel(s)). This is especially advantageous in relation to refueling of fuel cell vehicles.

According to an advantageous embodiment of the invention, the system according to any of the preceding claims is controlled according to the method of claims 21-31.

Moreover, an aspect of the invention relates to a method of reducing a start-up torque of a motor driving a crankshaft of a high-pressure diaphragm gas compressor, said method comprises the steps of: terminating an operation cycle by closing a compressor inlet valve before said crankshaft of said compressor stop rotation, and starting a subsequent operation cycle by opening said compressor inlet valve after at least one complete compression stroke.

The operation cycle can be defined as terminated when the inlet valve is closed in that then no more gas from the supply vessels than what is present in the inlet volume can be provided to the receiving vessel.

The control of the parts of the operation cycle, valves, motor, etc. of the compressor system is facilitated by the controller.

This is advantageous in that it has the effect, that the compressor can be started up with low pressure / a controllable pressure difference between pressure of the inlet volume and the outlet volume. This leads to a reduced start-up time and a reduced start-up torque.

The inlet and outlet volumes are fluidly connected by a recycling valve that is closed during normal operation / operation part of an operation cycle of the compressor e.g. when the compressor is used to fill a receiving vessel of a vehicle, truck trailer, supply storage, etc. The recycling valve is maintained closed during at least part of the termination part of the operation cycle and preferably also during the starting of the subsequent operation cycle.

According to an advantageous embodiment of the invention, a controller is controlling said compressor inlet valve, a motor driving said compressor and a recycle valve fluidly connecting an inlet volume and an outlet volume.

According to an advantageous embodiment of the invention, said operation cycle is terminated based on input from a pressure sensor of said receiving vessel.

The information of pressure of the receiving vessel can be used directly by the controller to initiate the termination of the operation cycle i.e. if a target pressure for the receiving vessel is reached. Alternatively, the pressure sensor reading can be used to derive e.g. state of charge / density of the receiving vessel, which also can be used as a stop indicator for an operation cycle.

The pressure information may be received from the controller of a fuel cell vehicle or measured at the fluid connection between the compressor and the dispenser / nozzle connected to the fuel cell vehicle.

According to an advantageous embodiment of the invention, said recycle valve is opened when the pressure in said inlet volume is below a desired start start-up pressure.

The desired start-up pressure is within a pressure range of 30-400bar preferably withing a range of 80-300bar.

According to an advantageous embodiment of the invention, the recycle valve is opened when the pressure in the inlet volume is below the lower limit of a start-up pressure range.

This is advantageous in that it has the effect, that pressure in the inlet volume will increase to up above the lower limit of the pressure range with pressure of the inlet volume equalises with the pressure of the outlet volume.

According to an advantageous embodiment of the invention, said recycle valve is opened after a time duration starting from closing said compressor inlet valve.

This is advantageous in that then the compressor is allowed to continue operation by cycling gas from the outlet volume, via the recycling loop comprising the recycling valve, to the inlet volume. Keeping the compressor running is advantageous in that it reduces wear of the compressor related to starting and stopping and ensures fast coupling in of said compressor if needed e.g. in a receiving vessel refueling event.

According to an advantageous embodiment of the invention, said compressor inlet valve is opened when said crankshaft reaches a rotation speed threshold.

This is advantageous in that in this way, the motor is stated up with a low torque due to the reduced gas pressure in the inlet volume.

According to an advantageous embodiment of the invention, said rotation speed threshold is 175RPM, preferably 225RPM, most preferably 250RPM.

The rotation speed of the crankshaft or motor axle, can be derived from a variable speed drive, etc. The rotation speed threshold is selected as the speed that can manage the highest pressure.

According to an advantageous embodiment of the invention, said recycle valve is opened when the pressure increase in said outlet volume break away from a current pressure ramp.

The pressure in the outlet volume follows a pressure ramp when refueling a receiving vessel. If the fluid connection to the receiving vessel is closed and the compressor is in operation, the pressure will break away from the slop used during the refueling and increase rapidly with a higher slope. This may be measured by the pressure sensor located in the dispensing conduit. Such a change in pressure ramp slope may initiate actuation of the recycle valve. Alternatively, it may initiate actuation of a valve to a buffer storage or other storages to prevent the pressure form increasing to a hazardous level.

Note that the recycle valve may also be controlled based on pressure in the inlet volume. This is advantageous in that the gas pressure in the inlet volume is then as desired and can be maintained as desired even though the compressor continues operation. Hence, shutdown of the compressor can be avoided leading to faster response to change in operation such as initiating a new operation cycle (such as starting a new refueling).

According to an advantageous embodiment of the invention, flow of gas from said inlet volume via said outlet volume is provided to said receiving vessel, to a supply storage or to a buffer storage while said compressor inlet valve is closed.

This is advantageous in that it has the effect, that pressure is reduced on the inlet side of the compressor without venting gas.

According to an advantageous embodiment of the invention, during start-up of said operation cycle, when the rotation speed of said crankshaft reaches said rotation speed threshold, said recycle valve is closed and said compressor outlet valve and said compressor inlet valve are opened.

Having the recycle valve open during a start-up part of an operation cycle (while conduit inlet and outlet valves are closed) is advantageous in that the crankshaft can reach a required rotation speed without notable resistance from gas pressure.

According to an advantageous embodiment of the invention, the method described in any of the claims 10-15 is implemented in a system according to any of the claims 1-9.

### The drawings

Various embodiments of the invention will in the following be described with reference to the drawings where:
fig. 1 illustrates a compressor system,
fig. 2 illustrates an operation cycle of a compressor,
fig. 3 illustrates transition between operation and shutdown,
fig. 4 illustrates transition between shutdown and start-up,
fig. 5 illustrates transition between start-up and operation, and
fig. 6 illustrates a pause in operation.

### Description

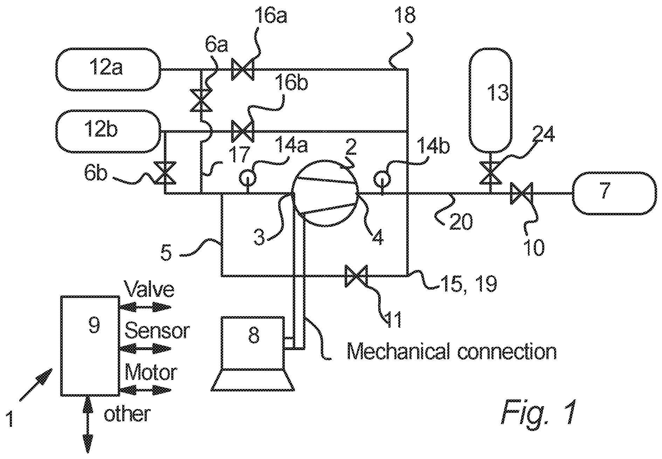

Fig. 1 illustrates a compressor system 1 according to an embodiment of the invention. The compressor system 1 of this embodiment comprises a supply storage 12 comprising two storage vessels 12a, 12b. A supply storage may comprise more storage vessels than illustrated. The higher number of individual vessels, the more flexibility is provided to the compressor system in that the number of different inlet pressures available to the compressor is increased.

Flow of gas to and from each of the individual storage vessels 12a, 12b is controllable by the controller 9. In Fig. 1 the controller 9 controls compressor inlet valves 6a, 6b. The compressor inlet valves may be positioned anywhere in the compressor conduit 17 between the storage vessel and the compressor inlet 3 as long as it is able to turn on and off the flow of gas from the associated vessel.

It should be mentioned that an alternative system design includes storage vessel valves positioned immediately downstream the storage vessel. Then another storage vessel group valve may control flow from a group of the storage vessels and finally, the compressor inlet valve may control flow from the entire supply storage 12 to the compressor inlet 2. Note that none of the storage vessel valves or storage vessel group valves are illustrated in Fig. 1.

In addition to the compressor conduits 17 fluidly connecting the supply storage 12 to the compressor inlet 3. The compressor system also comprises consolidation conduits 18 fluidly connecting supply storage vessels 12 (or a group of supply storage vessels) to the compressor outlet 4. The consolidation conduits 18 are advantageous in that pressure consolidation can be made i.e. low pressure gas from one storage vessel may, via the compressor 2, increased and stored in a second storage vessel. Further, the consolidation conduits 18 may be used for cascade fueling of a receiving vessel 7. The flow of gas in the consolidation conduits 18 may be controlled by the controller 9 controlling cascade valves 16a, 16b.

In an embodiment of the invention in if valves are positioned and controlled correctly, the consolidation conduits 18 may work as / have the same function as the recycle conduit 19 which will be disclosed below.

The compressor 2 comprised by the compressor system may have either an oblong shaped or a circular shaped gas compression / hydraulic fluid chamber. The gas compression chamber and the hydraulic fluid chamber are separated by a diaphragm. Gas is introduced, via a compressor inlet 3, into the gas chamber and pressurized by the diaphragm, before it exits the gas compression chamber via the compressor outlet. The movement of the diaphragm is controlled by a hydraulic fluid system comprising a piston the movement of which in a cylinder is controlled by a crankshaft.

The crankshaft is mechanically connected to a motor 8 that preferably is controlled by a drive enabling soft start and soft stop of the motor axis rotation and thereby of the rotation of the crankshaft. The motor drive and thereby the motor is controlled by the controller 9 as will be described below. The mechanical connection may be implemented as a chain, direct shaft coupling, belt, etc..

The compressor 2 may comprise leakage detection, control of injection of hydraulic fluid in the hydraulic fluid chamber, etc. These aspects of the compressor design are not relevant to the present invention and since they are well known by the skilled person, they will not be described any further in this document.

Between the compressor inlet 3 and the one or more compressor inlet valves 6 an inlet volume 5 is defined. The size of the inlet volume 5 may be determined by the location of the valves 6a, 6b, 11 in the compressor conduit 17 and in the recycle conduit 19. Hence, the inlet volume 5 may include part of the compressor conduit 17 and the recycle conduit 19. Similar, between the compressor outlet valve(s) 10 and the compressor outlet 4 an outlet volume is defined. These volumes are separated by the recycling valve 11 and thus pressure equalizing between these two volumes can be established by opening the recycling valve 11.

It should be noted that the inlet volume 5 may also be referred to as a buffer volume and may be implemented as part of one or more of the conduits of the conduit systems 17, 19 having a larger diameter than other parts of the conduit systems 17, 19. Alternatively, the inlet volume may be implemented as a vessel connected to the conduit systems 17, 19 between valves 6a, 6, 11 via a valve. An inlet volume is advantageous in that it reduces pressure on the compressor inlet 3 at the end of an unloading sequence.

An unloading sequence should be understood as the specific operation of the compressor where the compressor inlet valves 6a, 6b are closed and the compressor continues to supply gas to a receiving vessel / volume. This operation state continues until the compressor outlet valve 10 is closed and the recycling valve 11 is opened establishing a pressure equalization between compressor inlet 3 and outlet 4 valves. In this operation state, the compressor may continue with reduced or non-reduced operation speed recycling gas via the recycle conduit

The compressor outlet 4 is fluidly connected to a receiving vessel 7 via a dispensing conduit 20. Thereby allowing direct fueling of the receiving vessel 7 via the compressor 2. The dispensing conduit 20 may extent from the compressor outlet 4 to the receiving vessel 7 or from the cascade valves 16 to the receiving vessel 7. As illustrated, the outlet volume 15 may include part of the dispending conduit 20, consolidation conduit 18 and recycle conduit 19. The size of the outlet volume 15 may be determined by the location of valves 16, 10, 24, 11 in these conduits 18, 19, 20.

Fluidly connected to the dispensing conduit 20 a buffer storage 13 may be connected. This buffer storage 13 may be suitable for receiving gas form the compressor inlet volume 5 / compressor outlet volume 15 if e.g. the pressure of these volumes are to be regulated. The buffer storage may also be used as high-pressure (e.g. between 750MPA and 120MPa) storage increasing flexibility in methods of refueling the receiving vessel 7.

The dispensing conduit ends in a nozzle that is designed to fit the receptable of a receiving vessel 7 or connection piece connected to the receiving vessel 7. A compressor outlet valve 10, controllable by the controller 9, is controlling flow from the compressor outlet 4 (or from the supply storage) to the receiving vessel 7.

A dispenser may be located at the end of the dispensing conduit 20, requirements to such dispenser may change from type of receiving vessel to type of receiving vessel. The dispenser is not considered essential to the present invention and since its design and functionality is known by the skilled person it is not described in further details in this document.

The receiving vessel 7 may be one vessel or a system of fluidly connected vessels. These vessels may be part of a used a storage such as a stationary storage or a movable storage (e.g. truck trailer) or may be part of moving object such as a heavy duty vehicle or a light duty vehicle.

It should be noted that the valves mentioned in this document may be any kind of controllable valves including check valves.

Further it should be noted, that even though not desired to use, the compressor system 1 comprises a venting valve. The purpose for this is to be able to reduce pressure in case of errors in the system and thereby avoid hazardous situations.

The naming and definition of the conduits 17-20 may be dynamic in dependency of what the conduit is used for / direction of gaseous flow. As an example, if e.g. the consolidation line is use for cascade fueling of a receiving vessel, it may be / be part of the compressor outlet conduit 20.

As mentioned above, the compressor system may be part of a hydrogen refueling station the purpose of which is to refuel vessels of a fuel cell vehicle. A fuel cell vehicle should be understood as any kind of fuel cell powered moving object such as construction equipment (such as Excavator, Dozer, Backhoe, Tractor, etc.), train, aeroplan, ship, truck, car, bus, truck trailer, etc. Such refueling station may refuel fuel cell vehicles either via cascade principles i.e. without the compressor 2 or direct i.e. via the compressor 2. Further the compressor may be used to consolidate pressure in storage vessels of the hydrogen refueling station or storage vessels external to the hydrogen refueling station such as of truck trailers.

The recycle valve 11 may be implemented as a pressure regulating valve meaning that it is possible to control the pressure in the outlet volume 15. This may be especially advantageous when the compressor is implemented in a hydrogen refueling station. A pressure regulation valve could either regulate pressure mechanic by adjustment of a force from pressure in the outlet volume 15 there is needed to open the valve. This force could be regulated by a spring force. The pressure regulation could also be implemented by a controller controlling when to open and close the recycle valve 11 by controlling a electricity, hydraulics, air, etc. This could e.g. be based on a pressure measurement e.g. from the sensor 14b. A pressure regulating recycle valve 11 is advantageous in that it has the effect, that if set to a threshold pressure of e.g. 450bar, the compressor system would, seen from a receiving vessel having 100% state of charge at 350 bar such as e.g. a heavy duty vehicle, be an infinite gas supply (to the extend the supply storage 12 and compressor 2 can comply with demand from the receiving vessel(s)).

It should be noted that the compressor may be a multi-head compressor meaning that the compressor 2 has two compressor heads. In an embodiment, the movement of the pistons of the two heads are both determined by the same crankshaft i.e. the pistons are both mechanically connected to the same crankshaft.

In the two head embodiment, the same motor 8 have to start two heads simultaneously and therefore in this embodiment, the present invention is even more advantageous than in the one head embodiment illustrated on Fig. 1. The second head would, on Fig. 1, be connected in parallel to the already illustrated compressor 2.

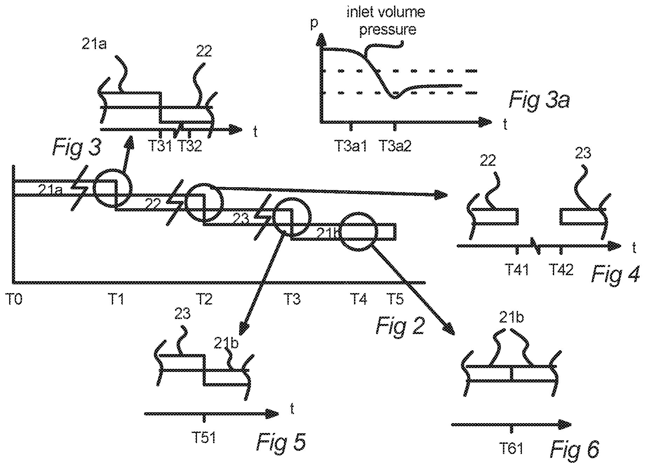

Fig. 2 illustrates an operation cycle of a compressor according to an embodiment of the invention. An operation cycle is defined as when the compressor is in operation i.e. that the crankshaft is rotating. During one operation cycle several storage vessels (12, 13, 7) e.g. of different types e.g. of different vehicles, e.g. of different locations may be refueled. An operation cycle may also include a shift between refueling a storage vessel and performing pressure consolidation of storage vessels of a supply storage 12.

From Fig. 2 is it seen that an operation cycle can be divided in at least three parts namely in an operation part 21, a shut-down part 22 and a start-up part 23. The timeline on Fig. 2 starts at time T0 where the compressor is in operation i.e. in an operation part 21 of an operation cycle. At time T1, the operation cycle shifts to a shut-down part 22 and at time T3 a new operation cycle is started up. At time T4, the new operation part is paused, and the new operation cycle is only illustrated until time T4.

Fig. 3 illustrates the transition or shift between the operation part 21a and the shut-down part 22. In one embodiment, the shift illustrated at T1 on Fig. 2 and illustrated at time T31 on Fig. 3, is initiated by the controller 9 instructing the compressor inlet valve(s) 6 to close and thereby stop flow of gas from the supply storage 12 to the compressor inlet 4.

When the inlet valve 6 is closed, at least one of the compressor output valve 10, the cascade valve(s) 16 or buffer valve 24 are opened to allow gas sucked from the inlet volume 5 to escape from the outlet volume 15. Hence, with a closed inlet valve 6 and e.g. an open buffer valve 24, a reduction of pressure in the inlet volume 5 is obtained.

At time T32, the desired pressure is reached in the inlet volume 5 and, continuing the example from above, the buffer valve 24 is closed. Preferably this is timed with the stand still of the crankshaft or at least with the torque provided to the crankshaft so that no additional pressure increase is established in the outlet volume 15. Until time T32 the gas from the inlet volume has been moved to one of the receiving vessels. At or after time T32, the recycling valve is opened to allow pressure equalization between the inlet and outlet volumes 5, 15.

The desired pressure at time T32 is within a pressure range between of 3-40MPa preferably withing a range of 8-30MPa. This pressure range is selected to be within the minimum start pressure for the compressor which may e.g. be 1MPa and the maximum start pressure which may e.g. be 40MPa. A 1MPa start pressure is possible, but would require sufficient precision from sensors and / or other components.

If e.g. the time from T32 to startup is too long so that pressure in the inlet volume is below the pressure range, pressure in the inlet volume 5 can be increase by opening shortly the inlet valve 6. If the pressure for some reason is above the maximum pressure, the pressure in the inlet volume 5 can be reduced by venting or if possible, supplying it to a storage vessel.

The timing of actions related to the shutdown part i.e. closing inlet valve 6, closing outlet valve 10, stopping motor 8, etc. to reach a pressure in the inlet volume 5 within the pressure range can be calculated by knowledge of the volume and pressure of the inlet and outlet volume. This is illustrated in Fig. 3a.

Fig. 3a illustrates the pressure in the inlet volume over time. At time T3a1 the inlet valve 6 is closed causing the pressure in the inlet volume 5 to decrease because the compressor is still running (either based on inertia or power from motor) and sucking pressure from the inlet volume to the outlet volume (which may further be provided to one of the storage vessels). Note that time T3a1 corresponds to time T32 on Fig. 3a.

The compressor continues to suck from the inlet volume 5 until time T3a2. Note that the pressure in the inlet volume at this point is below the lower limit of the pressure range. The diaphragm will work until stand still of the crankshaft, but at time T3a2, the speed of the crankshaft should be reduced to a level where pressure is equalized and any pumped gas returns to the compressor inlet.. At this time, the recycle valve 11 is opened and the pressure in the inlet volume 5 and outlet volume 15 is equalized. The equalization, as illustrated, increases the pressure in the inlet volume up to a level that is within the pressure range

The duration of time from time T31 to T32 may be determined by the pressure in the inlet volume. The rotation of the crankshaft may be forced to continue rotation and thereby reducing pressure in the inlet volume 5 until a certain pressure threshold is reached. The pressure in the inlet volume 5 may be measured by a pressure sensor 14a, the pressure in the outlet volume 15 may be measured by a pressure sensor 14b or similar to establish a pressure to compare to the pressure threshold. Note that other pressure may be derived from knowledge of temperature and volume, hence the invention is not limited to measure pressure and control based on such measurement.

Fig. 4 illustrates the transition or shift between the shutdown part 22 and the start-up part 23. In an embodiment, the termination part is terminated when the crankshaft does no longer rotate (time T41). Reaching stand still can either be obtained by simply does not apply a rotation force from the motor to the crankshaft or by actively breaking the motor. Breaking should be understood as not providing power to the motor 8 and thereby letting only inertia drive the crankshaft until finally the pressure of gas in the gas chamber acts as a spring making the membrane and piston bounce up and down.

It should be noted that with stand still should be understood as a rotation speed that is not able to reduce pressure in the inlet volume further.

At time T42, the controller 9 initiates a new compression cycle by allowing the motor 8 to start rotating and via the mechanical connected between motor axle and crankshaft, the crankshaft is started to rotate, and a new operation cycle is stated.

Because of the reduction of pressure in the inlet volume established e.g. as described with reference to Fig. 3 the torque required from the motor to start rotation of the crankshaft is reduced. Therefore, the motor size can be reduced and with this also footprint, noise, price and power consumption.

In an embodiment of the invention, the start-up from stand still of the crankshaft includes a counter-rotation part. This movement is possible if the crankshaft has not been moved for a while and due to leaking hydraulic fluid at the piston, the piston is moved down towards the bottom dead centre. The counter-rotation part is controlled by the motor 8 in that it, via the mechanical connection, ensures a rotation against the normal direction of rotation of the crankshaft. The angle of the counter rotation is as high as the motor is able to provide and when that angle is reached, the motor is controlled to run the normal way. In this way, a spring like force is provided by compressing the gas present in the gas chamber which is used to assist the motor to provide the first revolution of the crankshaft or at least the first complete compression stroke. The first complete compression stroke is defined as a movement from the bottom dead centre to the top dead centre.

The motor 8 is preferably controlled by a motor drive such as soft starter or a variable frequency drive.

The time duration between time 41 and 42 is difficult to determine, it may depend on when a vehicle needs to be refueled, if a trailer swap is needed, if pressure consolidation is needed etc. hence, this time duration may vary from a few minutes such as below 5 minutes and up to several hours such as up to and above 24 to 48 hours.

It should be noted, that from the shutdown part 22, the operation part may be resumed if needed and if the crankshaft has not completely stopped rotation.

Fig. 5 illustrates the transition between the start-up part 23 and the operation part 21. The motor 8 is already running as described above with reference to fig. 4. In an embodiment of the invention, the start-up part 23 is terminated when the compressor outlet valve 10 or the cascade valve(s) 16 opens (T51). At time T51 the rotation speed or torque is at desired level and the valves can be opened. These valves are controlled by the controller 9 and change status e.g. from closed to open based on a rotation speed of the motor 8 and / or of the crankshaft, a certain time after the motor is started, a desired pressure in the inlet or outlet volume 5, 15 is reached or the like.

Fig. 6 illustrates an operation part 21b including a recycling part. The recycling part is relevant to enter if for some reason the operation part 21b need to be terminated instantly without venting gas. If the compressor output valve 10 is closed during an operation part 21b, the pressure will increase rapidly in the relatively small outlet volume 15. To avoid a too high pressure increase or stopping the compressor, the recycle vale 11 can then be opened at time T61. In addition, the inlet valve 6 may be closed leading to the establishing of a recycle loop where gas can be recycled through the compressor. The first part of the operation part 21b is operation part an operation part whereas in the second part of operation part 21b, the compressor system is running in a recycle mode i.e. circulating the same gas from inlet 3 to outlet 4 through the recycling valve 11.

In an embodiment, the pressure measured by the pressure sensor 14b at the outlet of the compressor is used to regulate pressure in the outlet volume 15. Hence, if a change in pressure increase over time is observed that breaks away from pressure increase observed in a past time period, the recycle valve 11, buffer valve 24 or cascade valves 16. This is to ensure that pressure does not continue to increase in the outlet volume if the compressor is running and thus avoid venting.

From the above-described compressor system and method of controlling it, it is now clear that a compressor can be started-up with a lower torque than compressors of known compressor systems. In conventional compressors the starting moment is related to inertia and pressure. Increase in pressure is directly proportional to shaft moment and thus related to increased start moment. The described method of reducing the inlet pressure combined with recycling and reversed start rotation enables a substantial reduction of needed starting moment.

The reduced start-up torque is obtained by reducing pressure in the inlet volume 5. This may be done by continuing operation of the compressor with open outlet valve 10 after closing of the inlet vale 6.

In addition, the start-up of rotation of the crankshaft is done by a rotation of the crankshaft against the normal rotation direction. The rotation against normal rotation may only be half a rotation of the crankshaft i.e. less than 180 degrees, preferably less than 100 degrees, most preferably less than 75 degrees. In the areas of 50 degrees has turned out to be suitable in an embodiment of the invention.

### List

1. Compressor system
2. Diaphragm compressor
3. Compressor inlet
4. Compressor outlet
5. Inlet volume
6. Compressor inlet valve
7. Receiving vessel
8. Motor
9. Controller
10. Compressor outlet valve
11. Recycling valve
12. Supply storage
13. Buffer storage
14. Pressure sensor
15. Outlet volume
16. Cascade valves
17. Compressor conduits
18. Consolidation conduits
19. Recycle conduit
20. Dispensing conduit
21. Operation part of operation cycle
22. Shut down part of operation cycle
23. Start-up part of operation cycle
24. Buffer valve

## Claims

1. A compressor system (1) comprising:
a high-pressure diaphragm gas compressor (2) having a compressor inlet (3) and a compressor outlet (4),
wherein an inlet volume (5) is defined between a compressor inlet valve (6) and said compressor inlet (3),
wherein said compressor outlet (4) is fluidly connected to a receiving vessel (7), a motor (8) configured to drive a crankshaft of said compressor (2),
**characterised by** a controller (9) configured to control operation of said compressor (2), said compressor inlet valve (6) and said motor (8), during a plurality of successive operation cycles,
wherein during a shut-down part of an operation cycle, said compressor inlet valve (6) is configured for being closed before said crankshaft stop rotation, and
wherein during a start-up part of a subsequent operation cycle, said compressor inlet valve (6) is configured for being opened after at least one completed compression stroke.

2. A system according to claim 1, a recycling valve (11) fluidly connects an outlet volume (15) and said inlet volume (5).

3. A system according to any one of claims 1 and 2, wherein said compressor system (1) is part of a hydrogen refueling station.

4. A system according to any of the preceding claims, wherein said high-pressure diaphragm gas compressor (2) comprises a metal diaphragm.

5. A system according to any of the preceding claims, wherein said controller (9) is further configured to control a recycling valve (11) located in a fluid connection between said compressor inlet (3) and said controller outlet (4).

6. A system according to any of the preceding claims, wherein said controller (9) is further configured for controlling said complete compression stroke as a first compression stroke configured including an initial movement of the crankshaft in a direction of rotation opposite to the direction of rotation of the crankshaft after said first complete compression stroke.

7. A system according to any of the preceding claims, wherein said controller (9) is further configured to open said compressor inlet valve (6) when said crankshaft reaches a rotation threshold.

8. A system according to any of the preceding claims, wherein during said shut-down part said controller (9) is further configured to close said compressor outlet valve (10) and opening said recycling valve (11).

9. A system according to any of the preceding claims, wherein the system according to any of the preceding claims is controlled according to the method of claims 10-15.

10. A method of reducing a start-up torque of a motor (8) driving a crankshaft of a high-pressure diaphragm gas compressor (2), said method comprises the steps of:
terminating an operation cycle by closing a compressor inlet valve (6) before said crankshaft of said compressor (2) stop rotation, and
starting a subsequent operation cycle by opening said compressor inlet valve (6) after at least one complete compression stroke.

11. A method according to claim 10, wherein said recycle valve (11) is opened when the pressure in said inlet volume (5) is below a desired start start-up pressure.

12. A method according to any of the claims 10-11, wherein said compressor inlet valve (6) is opened when said crankshaft reaches a rotation speed threshold.

13. A method according to any of the claims 10-12, wherein said recycle valve (11) is opened when the pressure increase in said outlet volume (15) break away from a current pressure ramp .

14. A method according to any of the claims 10-13, wherein flow of gas from said inlet volume (5) via said outlet volume (15) is provided to said receiving vessel (7), to a supply storage (12) or to a buffer storage (13) while said compressor inlet valve (6) is closed.

15. A method according to any of the claims 10-14, wherein during start-up of said operation cycle, when the rotation speed of said crankshaft reaches said rotation speed threshold, said recycle valve (11) is closed and said compressor outlet valve (10) and said compressor inlet valve (6) are opened.

## Patentansprüche

1. Kompressorsystem (1), umfassend:
einen Hochdruckmembrangaskompressor (2), der einen Kompressoreinlass (3) und einen Kompressorauslass (4) aufweist,
wobei ein Einlassvolumen (5) zwischen einem Kompressoreinlassventil (6) und dem Kompressoreinlass (3) definiert ist,
wobei der Kompressorauslass (4) mit einem Aufnahmebehälter (7) fluidisch verbunden ist, einen Motor (8), der konfiguriert ist, um eine Kurbelwelle des Kompressors (2) anzutreiben,
**gekennzeichnet durch**
eine Steuerung (9), die konfiguriert ist, um den Betrieb des Kompressors (2), des Kompressoreinlassventils (6) und des Motors (8) während einer Vielzahl von aufeinanderfolgenden Betriebszyklen zu steuern,
wobei das Kompressoreinlassventil (6) während eines Abschaltteils eines Betriebszyklus konfiguriert ist, um geschlossen zu sein, bevor die Kurbelwelle eine Drehung stoppt, und
wobei das Kompressoreinlassventil (6) während eines Anlaufteils eines nachfolgenden Betriebszyklus konfiguriert ist, um nach mindestens einem abgeschlossenen Kompressionshub geöffnet zu sein.

2. System nach Anspruch 1, wobei ein Rückführventil (11) ein Auslassvolumen (15) und das Einlassvolumen (5) fluidisch verbindet.

3. System nach einem der Ansprüche 1 und 2, wobei das Kompressorsystem (1) Teil einer Wasserstofftankstelle ist.

4. System nach einem der vorstehenden Ansprüche, wobei der Hochdruckmembrangaskompressor (2) eine Metallmembran umfasst.

5. System nach einem der vorstehenden Ansprüche, wobei die Steuerung (9) ferner konfiguriert ist, um ein Rückführventil (11) zu steuern, das sich in einer Fluidverbindung zwischen dem Kompressoreinlass (3) und dem Steuerungsauslass (4) befindet.

6. System nach einem der vorstehenden Ansprüche, wobei die Steuerung (9) ferner zum Steuern des vollständigen Kompressionshubs als einen ersten Kompressionshub konfiguriert ist, der einschließlich einer anfänglichen Bewegung der Kurbelwelle in eine Drehrichtung konfiguriert ist, die der Drehrichtung der Kurbelwelle nach dem ersten vollständigen Kompressionshub entgegengesetzt ist.

7. System nach einem der vorstehenden Ansprüche, wobei die Steuerung (9) ferner konfiguriert ist, um das Kompressoreinlassventil (6) zu öffnen, wenn die Kurbelwelle einen Drehschwellenwert erreicht.

8. System nach einem der vorstehenden Ansprüche, wobei die Steuerung (9) während des Abschaltteils ferner konfiguriert ist, um das Kompressorauslassventil (10) zu schließen und das Rückführventil (11) zu öffnen.

9. System nach einem der vorstehenden Ansprüche, wobei das System nach einem der vorstehenden Ansprüche nach dem Verfahren der Ansprüche 10 bis 15 gesteuert wird.

10. Verfahren zum Reduzieren eines Anlaufdrehmoments eines Motors (8), der eine Kurbelwelle eines Hochdruckmembrangaskompressors (2) antreibt, wobei das Verfahren die Schritte umfasst:
Beenden eines Betriebszyklus durch das Schließen eines Kompressoreinlassventils (6), bevor die Kurbelwelle des Kompressors (2) die Drehung stoppt, und
und Starten eines nachfolgenden Betriebszyklus durch das Öffnen des Kompressoreinlassventils (6) nach mindestens einem vollständigen Kompressionshub.

11. Verfahren nach Anspruch 10, wobei das Rückführventil (11) geöffnet ist, wenn der Druck in dem Einlassvolumen (5) unter einem gewünschten Startanlaufdruck liegt.

12. Verfahren nach einem der Ansprüche 10 bis 11, wobei das Kompressoreinlassventil (6) geöffnet ist, wenn die Kurbelwelle einen Drehzahlschwellenwert erreicht.

13. Verfahren nach einem der Ansprüche 10 bis 12, wobei das Rückführventil (11) geöffnet ist, wenn der Druckanstieg in dem Auslassvolumen (15) von einem aktuellen Druckanstieg abweicht.

14. Verfahren nach einem der Ansprüche 10 bis 13, wobei ein Gasstrom von dem Einlassvolumen (5) über das Auslassvolumen (15) zu dem Aufnahmebehälter (7), zu einem Vorratsspeicher (12) oder zu einem Pufferspeicher (13) bereitgestellt wird, während das Kompressoreinlassventil (6) geschlossen ist.

15. Verfahren nach einem der Ansprüche 10 bis 14, wobei während des Anlaufens des Betriebszyklus, wenn die Drehzahl der Kurbelwelle den Drehzahlschwellenwert erreicht, das Rückführventil (11) geschlossen ist und das Kompressorauslassventil (10) und das Kompressoreinlassventil (6) geöffnet sind.

## Revendications

1. Système de compresseur (1) comprenant :
un compresseur de gaz à membrane haute pression (2) ayant une entrée de compresseur (3) et une sortie de compresseur (4),
dans lequel un volume d'entrée (5) est défini entre une soupape d'entrée de compresseur (6) et
ladite entrée de compresseur (3),
dans lequel ladite sortie de compresseur (4) est reliée fluidiquement à un récipient de réception (7), un moteur (8) étant configuré pour entraîner un vilebrequin dudit compresseur (2),
**caractérisé par**
un dispositif de commande (9) configuré pour commander le fonctionnement dudit compresseur (2), de ladite soupape d'entrée de compresseur (6) et dudit moteur (8), pendant une pluralité de cycles de fonctionnement successifs,
dans lequel, pendant une partie d'arrêt d'un cycle de fonctionnement, ladite soupape d'entrée de compresseur (6) est configurée pour être fermée avant que ledit vilebrequin ne s'arrête de tourner, et
dans lequel, pendant une partie de démarrage d'un cycle de fonctionnement ultérieur, ladite soupape d'entrée de compresseur (6) est configurée pour être ouverte après au moins une course de compression achevée.

2. Système selon la revendication 1, une soupape de recyclage (11) relie fluidiquement un volume de sortie (15) et ledit volume d'entrée (5).

3. Système selon l'une quelconque des revendications 1 et 2, dans lequel ledit système de compresseur (1) fait partie d'une station de remplissage d'hydrogène.

4. Système selon l'une quelconque des revendications précédentes, dans lequel ledit compresseur de gaz à membrane haute pression (2) comprend une membrane métallique.

5. Système selon l'une quelconque des revendications précédentes, dans lequel ledit dispositif de commande (9) est en outre configuré pour commander une soupape de recyclage (11) située dans une communication fluidique entre ladite entrée de compresseur (3) et ladite sortie (4) de dispositif de commande.

6. Système selon l'une quelconque des revendications précédentes, dans lequel ledit dispositif de commande (9) est en outre configuré pour commander ladite course de compression complète comme une première course de compression configurée comportant un déplacement initial du vilebrequin dans une direction de rotation opposée à la direction de rotation du vilebrequin après ladite première course de compression complète.

7. Système selon l'une quelconque des revendications précédentes, dans lequel ledit dispositif de commande (9) est en outre configuré pour ouvrir ladite soupape d'entrée de compresseur (6) lorsque ledit vilebrequin atteint un seuil de rotation.

8. Système selon l'une quelconque des revendications précédentes, dans lequel, pendant ladite partie d'arrêt, ledit dispositif de commande (9) est en outre configuré pour fermer ladite soupape de sortie de compresseur (10) et pour ouvrir ladite soupape de recyclage (11).

9. Système selon l'une quelconque des revendications précédentes, dans lequel le système selon l'une quelconque des revendications précédentes est commandé en fonction du procédé selon les revendications 10 à 15.

10. Procédé de réduction d'un couple de démarrage d'un moteur (8) qui entraîne un vilebrequin d'un compresseur de gaz à membrane haute pression (2), ledit procédé comprend les étapes consistant à :
terminer un cycle de fonctionnement en fermant une soupape d'entrée de compresseur (6) avant que ledit vilebrequin dudit compresseur (2) ne s'arrête de tourner, et
démarrer un cycle de fonctionnement ultérieur en ouvrant ladite soupape d'entrée de compresseur (6) après au moins une course de compression complète.

11. Procédé selon la revendication 10, dans lequel ladite soupape de recyclage (11) est ouverte lorsque la pression dans ledit volume d'entrée (5) est inférieure à une pression de démarrage souhaitée.

12. Procédé selon l'une quelconque des revendications 10 à 11, dans lequel ladite soupape d'entrée de compresseur (6) est ouverte lorsque ledit vilebrequin atteint un seuil de vitesse de rotation.

13. Procédé selon l'une quelconque des revendications 10 à 12, dans lequel ladite soupape de recyclage (11) est ouverte lorsque l'augmentation de pression dans ledit volume de sortie (15) s'éloigne d'une rampe de pression actuelle.

14. Procédé selon l'une quelconque des revendications 10 à 13, dans lequel un écoulement de gaz à partir dudit volume d'entrée (5) par l'intermédiaire dudit volume de sortie (15) est fourni audit récipient de réception (7), à un stockage d'alimentation (12) ou à un stockage tampon (13) tandis que ladite soupape d'entrée de compresseur (6) est fermée.

15. Procédé selon l'une quelconque des revendications 10 à 14, dans lequel, pendant le démarrage dudit cycle de fonctionnement, lorsque la vitesse de rotation dudit vilebrequin atteint ledit seuil de vitesse de rotation, ladite soupape de recyclage (11) est fermée et ladite soupape de sortie de compresseur (10) et ladite soupape d'entrée de compresseur (6) sont ouvertes.
